# EUROPEAN PATENT SPECIFICATION

(11) **EP 2 451 290 B1**
(45) Date of publication and mention of the grant of the patent: **26.03.2014**
(21) Application number: 10734363.4
(22) Date of filing: 12.07.2010
(51) Int. Cl.: A22C 7/00, A23P 1/10

(54) **MOULDING DEVICE**
FORMGEBUNGSVORRICHTUNG
DISPOSITIF DE MOULAGE

(30) Priority: 10.07.2009 NL 2003185
(43) Date of publication of application: 16.05.2012
(73) Proprietor: Marel Townsend Further Processing B.V., 5831 AV Boxmeer (NL)
(72) Inventor: VAN DER EERDEN, Hendricus Franciscus Jacobus Maria, NL-5421 PS Gemert (NL); MESKENDAHL, Dirk, D-47559 Kranenburg (DE); DEKKER, Thomas Willem, NL-6531 BE Nijmegen (NL); VEROUDEN, Franciscus Quirinus Fredrik, NL-5845 GZ Sint Anthonis (NL)
(74) Representative: Nijs, Erik Anton Marie
(86) International application number: PCT/NL2010/050450
(87) International publication number: WO 2011/005099

(56) References cited:
- EP-A- 0 763 324
- WO-A2-2004/002229
- FR-A- 964 072
- GB-A- 2 355 173
- US-A- 3 347 176
- US-A- 4 272 864
- US-A- 4 418 446
- US-A- 5 340 599
- US-A1- 2005 214 399

## Description

In general the present invention relates to mechanized moulding of products starting from a mass of foodstuff starting materials suitable for consumption. More particularly the invention relates to a moulding device.

Methods of moulding such products by machines and devices are known in the art. E.g. WO-A-0030458 and WO-A-2004002229 disclose moulding devices, comprising a moulding element that can be displaced in a movement direction by associated drive means, the moulding element comprising a body having at least one mould cavity having an opening in a face thereof. These known devices also comprise a supply device for supplying said mass to a mass distribution device, arranged at a fill position along the movement path of the moulding element. This mass distribution device fills the mass into the one or more mould cavities, while the moulding element travels along its movement path and at the fill position is slidingly engaged in a sealing manner by the mass distribution device. An example of a moulding element is a moulding drum having a number of mould cavities in its peripheral face. During rotation of the moulding drum the mould cavities, e.g. linearly or helically aligned, or a row of mould cavities, said row extending parallel to the axis of the drum, are filled with said mass flowing from the mass distribution device. Upon further rotation, the products thus shaped are released from the mould cavities at a product release position, usually onto a conveyor for transportation to a further processing facility, such as a freezer, oven for cooking, packaging station and the like.

Moulding devices having a linearly reciprocating moulding plate are also known in the art. In this case, the mould cavity is a through-opening extending between the main surfaces of the plate. An example thereof is known from US-A-4272864. Turntables comprising a rotary disc having mould cavities as recesses in a face thereof or through-openings extending between the main surfaces of the disc, are also known.

These known moulding devices are capable of producing moulded food products having a consistent shape, weight and volume. However, this consistency is frequently lost during the final preparation of the food product. For example, variations in dimensions occur e.g. due to non-uniform shrinkage upon application of heat, resulting in non-uniform organoleptical properties and appearance of the product thus prepared. For example, tenderness, moisture content and degree of browning may vary over the product. These effects are undesirable, in particular where the final products are to be prepared using standard procedures, e.g. in fastfood restaurants using a contact grill.

US 5 340 599 discloses a method of manufacturing three-dimensionally formed foods using a drum-type forming machine. The drum-type forming machine comprises a rotating drum-type forming machine body including forming blocks. The forming surfaces (bottom surfaces) of the forming blocks are raised or lowered with the rotation of the drum. A hopper receives food material to be formed. The food material is formed by filling it into one of the forming blocks when its forming surface is lowered. With rotation of the drum, the forming surface of the forming block is raised to extrude the food material filled and formed therein (formed product). The formed product is then separated from the drum and transferred onto a belt conveyor. The forming surface of the forming block is in a shape so as to give the formed product a desired shape.

An object of the invention is to provide an improved moulding device and/or method for moulding three dimensional products from a mass of foodstuff starting materials. In particular, it is an object of the invention to provide a moulding device and moulding method allowing the preparation of a final product having more uniform product properties, for example regarding organoleptical and appearance characteristics.

A further object is to provide a moulding device and moulding method allowing the preparation of a grilled tender meat product, such as a hamburger, having an excellent bite.

Still a further object is to provide a moulding device and moulding method allowing the preparation of such products in a reduced preparation time.

Another object is to provide a food preparation method for preparing, in particular grilling, a tender meat product.

According to the invention a moulding device as claimed in claim 1 is provided. The moulding device prepares three-dimensionally shaped products from a mass of food starting material that is suitable for consumption. Examples of products comprise all kinds of patties and burgers, in particular hamburgers. Suitable starting materials include generally an edible plastic mass (plastic meaning mouldable such as malleable, deformable), in particular a fibrous mass, in particular a mass comprising animal fibres, such as a mass comprising muscular tissue, most particularly a mass comprising comminuted meat, such as ground (lean) beef meat. The moulding member (also referred to as moulding element) comprises a mould body, such as a drum, a plate or disc. In an embodiment, the bottom of the mould cavity of the moulding member is made from a porous material or the moulding element is made of a porous material. A structure having passages that open into the mould cavity, such as said porous structure may assist in de-aeration during filling by allowing air to escape from the mould cavity when it is being filled through the passages (pores) and/or assist in removal of moulded products from a mould cavity at a product release position by blowing air through the passages into the mould cavity. In a face of the mould body one or more mould cavities or rows of cavities are provided. A mould cavity is delimited at least partially by upright sidewalls in the body, and thus has an opening or mouth in the respective face. The peripheral upright walls and bottom define the three-dimensional contours of the moulded product. They may have an overall non-flat shape, which is to be reproduced in the moulded product itself. Additionally shaping elements, which also define the permanent geometry of the moulded product even after final preparation, may be present in the mould cavity. The moulding element is displaceable over a path from a fill position to a product release position by means of appropriate displacement means, e.g. an (electro)motor, and from the product release position to the fill position. The mould cavity receives an amount of position. The mould cavity receives an amount of the mass from the mass distribution device, which is arranged at the fill position along the movement path travelled by the moulding element. At the fill position, the face of the moulding element that is provided with the one or more mould cavities, passes the outlet opening of the mass distribution device in a sealing manner substantially preventing leakage of the mass. Usually the outlet opening of the mass distribution device is provided in a flexible engaging element. During movement the overlap (or effective throughput area) between the outlet opening of the mass distribution device and the opening of the mould cavity varies. In this description, the process of filling a mould cavity during movement thereof with respect to the stationary mass distribution device is also referred to as dynamic filling. The mass is fed by supply means, e.g. from a hopper by a pump pressurizing the mass to some extent, to the mass distribution device.

According to the invention, the mould cavity is provided with walls which are configured to define a plurality of moulding cells (or a pattern of moulding cells) within the mould cavity. The moulding cells may constitute compartments which are separated from one another by the walls. The moulding cells may be arranged against each other. The walls are configured such that the pattern of moulding cells comprises at least two or more moulding cells which are arranged behind one another in the direction of the movement path of the moulding member. The walls extend at least partially in a transverse direction transversely with respect to the movement direction of the moulding member. The pattern of the moulding cells within the mould cavity can be designed in various ways. For example, the mould cavity may comprise one longitudinal row of moulding cells which are situated behind one another in the direction of the movement path of the moulding member. It is also possible for the moulding cavity to comprise a plurality of longitudinal rows of moulding cells which are adjacent to each other, wherein the moulding cells of each longitudinal row are situated behind one another in the direction of the movement path of the moulding member. In this case, the mould cavity may comprise a plurality of transverse rows of moulding cells, wherein the moulding cells of each transverse row extend in a transverse direction with respect to the movement path of the moulding member, and wherein the transverse rows of moulding cells are arranged behind one another in the direction of the movement path of the moulding member. The moulding cells may also be designed according to other patterns.

Each wall has a height which is 10-100% of the cavity height of the mould cavity. Thus, each wall has a height which is greater than at least 10% of the cavity height of the mould cavity. For example, each wall has a height which is 30-100% or according to the invention, 50-100% of the cavity height of the mould cavity. The walls of each mould cavity may each have the same height. It is also possible for a number of walls to have different heights. For example, a number of walls of a mould cavity may have a height which is substantially equal to the cavity height (100%), whereas other walls of said mould cavity may have a height of, for example, 50% of the cavity height. If there are a number of walls having a height which is substantially equal to the cavity height (100%), said walls may be provided with passage openings at their upper edges for allowing mass to flow through the passage openings to adjacent moulding cells. The passage openings may be formed by cut-outs, for example, notches provided in the upper edges of the walls. It is also possible that a number of walls have a height which varies along the length of the wall.

Thus, the moulding cells of the mould cavity are arranged upstream/downstream with respect to each other in the direction of the movement path of the moulding member. The mould cavity is divided into a plurality of moulding cells, wherein at least two or more of the moulding cells are situated adjacent to each other in the relative direction of movement of the moulding member with respect to the outlet opening of the mass distribution device. As a result, the mass flow in the mould cavity is influenced, in particular the mass flow within the mould cavity takes place in a stepwise manner. First, a quantity of mass is filled in a first moulding cell or a first transverse row of moulding cells extending transversely with respect to the movement path of the moulding member. The mass being filled is initially prevented from flowing upstream due to the presence of the walls of the first moulding cell of the first row of moulding cells. After a certain amount of filling, the mass being filled flows over these walls and enters a second moulding cell or a second row of moulding cells extending transversely with respect to the movement path of the moulding member. In addition, the moulding cells are also filled consecutively when they pass the outlet opening of the mass distribution device upon movement of the moulding member. Thus, a controlled flow of mass takes place in the mould cavity during filling of the mould cavity. As a result, each moulding cell contains a portion of mass having a uniform fibre orientation after filling. This is very effective for obtaining a product having uniform organoleptical and appearance characteristics upon final preparation.

In the prior art devices used in dynamic filling, once a front end of a mould cavity is in communication with the outlet opening of the mass distributing device, the mass is forced from the front end to the rear (upstream) end to some extent due to the pressurized state of the mass. The mass properties such as viscosity, elasticity and relaxation also play a role. The resulting movement of the mass in the mould cavity is uncontrollable, but due to friction and shear forces on the moving mass particles such as fibres present in the mass attain an oriented configuration over a relatively large surface area, which oriented configuration will differ in adjacent areas. Fibres tend to shrink during application of heat, in particular in the length direction of the fibres. As the oriented configurations are different locally, the resulting shrink upon final preparation will be different and unpredictable as well. Then the consumer experiences locally different organoleptical properties, taste and appearance.

With the moulding cells of the mould cavity according to the invention, the free movement length is limited in a direction parallel to the movement direction of the moulding element, which allows filling of the mould cavity in a stepwise manner, resulting in areas having a more similar fibre orientation, and thus resulting in a more uniform shrink upon heating. Uniform shrinkage in the thickness direction of a product during heating between heated contact surfaces maintains a substantially constant contact, thereby obtaining uniformity in organoleptical properties, appearance such as colouring (browning) product interior. In addition stepwise dynamic filling according to the invention reduces the risk of uncontrolled inclusion of air in the product. Such entrapment of air could occur, if a thin viscous mass is fed to a mould cavity under a filling pressure, and this mass spreads along the periphery of the mould cavity prior to filling the core section thereof. By stepwise filling, air is forced in a controllable manner from the front end to the rear end of a mould cavity (even if the opposite bottom part or bottom opening allows de-aeration by means of pores or openings) and the air is able to escape from the mould cavity.

Another beneficial effect of the invention is that the risk of the formation of an appendage, also called a lip, is reduced. Such an appendage is readily formed due to relaxation of the mass in the mould cavity, when the front end of the mould cavity is no longer covered by a mass distribution device, in particular the flexible engaging element thereof. As the mass is forced into the mould cavity under a filling pressure, and usually maintained under an externally applied pressure for some time during travel, upon leaving the filling position the front end of the shaped product that is still pressurized to some extent, is exposed to ambient pressure. Due to the overpressure or relaxation pressure a minor portion of mass at the front end is forced out of the mould cavity resulting in an appendage. In the invention the formation thereof is reduced because the means of influencing the flow of mass in the mould cavity also delimit building up relaxation tension of the total mass in the mould cavity during filling.

In an embodiment the peripheral wall and the bottom of the mould cavity of the moulding member are arranged in a single moulding body. In other words, the moulding member is formed by a moulding body, and the mould cavity is delimited by the peripheral wall and the bottom of the moulding body. The moulding body as a unit comprises the bottom and the peripheral wall of the mould cavity. The cavity height of the mould cavity i.e. the distance between the cavity opening and the bottom of the cavity is less than the thickness of the moulding body. This embodiment is particularly useful in a moulding device, wherein the moulding body has a curved surface, and wherein the one or more mould cavities are provided in the curved surface. An example of such a moulding body is a moulding drum having a plurality of mould cavities in the peripheral surface of a cylindrical body, which moulding drum can rotate about its longitudinal axis using a suitable drive, such as a motor. Turntables having this type of mould cavities as moulding elements are also contemplated, as well as reciprocating piston type moulding devices, wherein the piston head is the movable bottom part of a mould cavity. For example, the moulding body is formed by a turntable which is rotatable about a rotation axis.

In another embodiment, in particular useful in a linearly reciprocating moulding device, the moulding member comprises a first plate, which is provided with at least one through opening which defines the peripheral wall of the mould cavity, and also a second plate extending adjacent to the first plate so as to form the bottom of the mould cavity, and wherein the first plate and the second plate can be moved with respect to each other, for example along a linear path. The mould cavities can be bores (through openings) extending from a first main face of the first plate to the opposite second main face.

The mould cavity can be constructed in various ways. For example, the mould cavity comprises 2-300 moulding cells, in particular 10-100 moulding cells. This leads to a particularly controlled flow in the mould cavity. The volume of the mould cavity may be, for example, less than 1500 cm³, in particular about 900 cm³. It is possible that the cavity opening has a surface area of 3-400 cm². The cavity height of the mould cavity may be 2-40 mm, for example 5-15 mm. The walls may have a thickness of 0.5-5 mm, which allows the mass to flow over the walls in a very controlled manner. It is possible that the moulding cells of the mould cavity have substantially equal volumes. In other words, the dimensions of each of the moulding cells in the mould cavity may be substantially equal. It should be noted that the moulding cells may also have the same shape or different shapes, such as cubic, cylindrical and/or prismatic shapes. The height of the walls may be smaller than the cavity height of the mould cavity. Then, the mass may flow over the walls to adjacent moulding cells. If there are a number of walls having a height which is substantially equal to the cavity height, the upper ends of said walls may be provided with passage openings for allowing mass to flow through to adjacent moulding cells. The moulding cells may be arranged against each other.

In an embodiment, the bottom of the mould cavity of the moulding member is stationary in the height direction of the mould cavity. When the bottom and the peripheral wall of the mould cavity are formed as recess in a moulding body, the bottom and the peripheral wall are fixed with respect to each other. With an embodiment having a first plate provided with a through opening forming the peripheral wall and a second plate forming the bottom, wherein the first plate and the second plate can be moved with respect to each other, the bottom is not fixed with respect to the peripheral wall. However, the bottom is not displaceable in the height direction of the mould cavity. This is advantageous for stepwise filling of the mould cavity.

In an embodiment, the mass distribution device comprises an outlet opening which has a width which extends in a direction parallel to the movement path of the moulding member, wherein the width of the outlet opening is smaller than the largest dimension of the mould cavity in the direction parallel to the movement path of the moulding member. During filling of the mould cavity the mass being supplied through the outlet opening is aligned with only a portion of the moulding cells of the mould cavity. The moulding cells being arranged behind each other in the direction parallel to the movement path of the moulding member are filled consecutively when they pass the outlet opening of the mass distribution device upon movement of the moulding member.

It is also possible for the outlet opening of the mass distribution device to extend in a transverse direction transversely with respect to the movement path of the moulding member, which outlet opening has a length which is greater than the largest dimension of the mould cavity in the transverse direction. Thus, the mass distribution device may comprise an outlet opening, which extends in a direction perpendicular to the movement path of the moulding member at the filling position (cross direction), the outlet opening having a length larger than the greatest dimension of a cavity or row of cavities in the cross direction. An example of such outlet opening is a rectangular slit.

In a further embodiment the moulding cells of the mould cavity comprise flow restricting means for restricting the mass flow in the mould cavity in a direction parallel to the movement direction of the moulding element. Such flow restricting means restrict the mass flow from the front end - which during dynamic filling is the first part to overlap with the outlet opening of the mass distribution device as explained above - of a mould cavity to the rear end thereof as seen in the lengthwise direction. In the cross direction the flow of mass in the mould cavity is already at minimum, as the overlap between the outlet opening of the mass distribution device and the cavity opening as seen in the cross direction occurs at the same time.

As an example, such flow restricting means may comprise protrusions extending from the bottom part or bottom opening of a mould cavity in the height direction of the mould cavity, i.e. towards the cavity opening in the face of the moulding member slidingly and sealingly engaged by the mass distribution device. These protrusions, preferably perpendicularly arranged to the bottom part in view of product release, may be arranged in a regular pattern. A random distribution of protrusions will essentially have the same effect. In case of individual protrusions, preferably a pattern having staggered projections is applied in order to restrict flow in the lengthwise direction of a mould cavity. Advantageously the protrusions have a (frusto)conical shape having its base at the bottom part or bottom opening of a mould cavity. The protrusions may have a height corresponding to the height of the mould cavity.

In an embodiment, the walls extend at least partially in a direction perpendicular to the movement direction of the moulding member (i.e. in the width direction of a mould cavity). Advantageously the height of the walls is at least 50%, more preferably at least 66% of the height of the cavity, such as 75%. In still another example, the walls do not extend over the full width of the mould cavity. Instead ,the walls are discontinuous walls leaving free one or more gaps. Advantageously, the width of the walls (in the direction of movement) is small compared to the height thereof. In particular, this width of the walls and/or protrusions is such that upon final preparation of the moulded product, the gap width in the moulded product resulting as an imprint of the walls and/or protrusions, disappears completely or almost completely due to shrink of the connections in the moulded product. The walls are designed such that a mould cavity is divided in multiple (imaginary) compartments connected to each other by a top space at the fill opening of a mould cavity. Upon dynamic filling those compartments lying in a row in the width direction of a mould cavity are filled almost simultaneously. Combinations of protrusions, separate walls and cells are also contemplated.

Regularly patterned flow restricting means may leave behind an imprint or traces thereof in the food product even after final preparation such as cooking and the like. For certain products such an imprint is not desired because it is associated with artificial food. In view thereof more complex shapes and patterns of walls are preferably used in order to decrease recognizing such imprints in the final products. Herringbone patterns, randomized structures, a mixture or combination of different shapes and dimensions are examples of obscuring recognition of such imprints in the final products, and thus the product is likely to be appreciated as a natural product.

The discontinuities complementary to the protrusions and/or walls in the moulded product itself are beneficial during further processing and preparation of the moulded product. Due to the increased surface area compared to a full solid product having substantially flat peripheral surfaces without irregularities the duration of further processing steps involving heat exchange such as cooling or freezing is reduced. The most prominent effect is achieved during cooking (e.g. frying, baking, grilling and the like) between heated contact plates. Then the voids that are defined by the discontinuities, in the product are enclosed either all over by the mass because the applied contact pressure deforms the mass or partly by the mass and partly by a contact plate. These confined voids provide local areas where steam is formed and result in a shorter distance from these steam heat sources to the core of the product, causing a substantial reduction of cooking (grilling) time. Upon testing a reduction of up to 50% has been achieved compared to a full solid product. Moreover during cooking moisture like juices and fat is collected and retained in these voids without being lost from the product. Shorter cooking time and retention of moisture result in a tender meat a tender meat product having an excellent bite. However, due to the pressure exerted on the product during the imprints of the flow restriction means disappear in the final product to such an extent that they are not perceived in a negative way. As already explained above with respect to the width of the walls and protrusions, shrink also contributes to disappearance of the imprints of the flow restriction means.

Thus by properly dimensioning the moulding cells including its geometry, height and width, grilling time, browning, yield and bite can be controlled and optimized.

Therefore a moulded product may comprise a connecting bottom part (corresponding to the top space of the mould cavity) and discontinuities in the surface of the top part of the product. The discontinuities can extend over the full height of the product. The connecting bottom part may have a continuous surface.

There is also provided a moulding member for moulding three-dimensional products from a mass of starting materials suitable for consumption is provided, which moulding member comprises a moulding surface which is provided with at least one mould cavity for receiving said mass, the mould cavity being delimited by a bottom and a peripheral wall defining a cavity opening in the moulding surface, wherein the mould cavity has a cavity height which is defined between the bottom and the cavity opening, which moulding member can be moved along a movement path from a fill position for filling the mass into the mould cavity to a product release position for releasing a moulded product from the mould cavity and from the product release position to the fill position, wherein the mould cavity is provided with walls which are configured to define a plurality of moulding cells within the mould cavity, wherein at least two of the moulding cells are arranged behind one another in the direction of the movement path of the moulding member, and wherein the walls have a height which is 10-100% of the cavity height of the mould cavity. This moulding member may be designed according to one or more of the features of claims 1-12 and/or according to one or more of the features mentioned in this description. Thus, the mould cavity is provided with means for influencing the mass flow in the mould cavity. This moulding element, when used in a moulding device including dynamic filling as described above, offers the same advantages and beneficial effects. The embodiments relating to the moulding member as such described above are equally applicable to this second aspect of the invention.

There is also provided a method for mechanized moulding of three-dimensional products from a mass of starting materials suitable for consumption, comprising:
- providing a mass of foodstuff starting material suitable for consumption,
- providing a moulding member having a moulding surface which is provided with at least one mould cavity which is delimited by a bottom and a peripheral wall defining a cavity opening in the moulding surface, wherein the mould cavity has a cavity height which is defined between defined between the bottom and the cavity opening, wherein the mould cavity is provided with walls which are configured to define a plurality of moulding cells within the mould cavity, wherein at least two of the moulding cells are arranged behind one another in a direction of movement of the moulding member, and wherein the walls have a height which is 10-100% of the cavity height of the mould cavity,
- filling a quantity of mass into the mould cavity of the moulding member while the moulding member is being moved in the direction of movement such that the moulding cells of the mould cavity are filled in a stepwise manner. Thus, the mass flow in the mould cavity is influenced, in particular the flow is restricted in a direction parallel to the movement direction of the moving mould element. The method according to the invention provides the same advantages as already described above, and the preferred embodiments are similarly applicable.

There is also provided a method of cooking, in particular grilling, a moulded product from a mass of starting materials suitable for consumption, said method comprising a method for mechanized moulding described in the preceding paragraph and a step of cooking the moulded product in a contact heating apparatus, preferably a contact grill. It will be appreciated that steps in between the moulding step and the cooking step, e.g. cooling, freezing and thawing out, can be incorporated in this method according to the invention.

Herein is also described providing a general shape to the product and the formation of the discontinuities is performed simultaneously. This is an advantage over systems, wherein solid moulded products are prepared in a first step and wherein in a subsequent separate step a surface of such moulded products is treated using some kind of perforator, a metal rod with needles. There is also provided, but not according to the invention a moulding device for moulding three dimensional products from a mass of foodstuff starting material suitable for consumption, comprising:
- a moulding member having a moulding surface which is provided with at least one mould cavity which is delimited by a bottom and a peripheral wall defining a cavity opening in the moulding surface, which moulding member can be moved along a movement path from a fill position for filling the mass into the mould cavity to a product release position for releasing a moulded product from the mould cavity and from the product release position to the fill position,
- a mass distribution device, which is arranged at the fill position along the movement path of the moulding member for filling the mass into the mould cavity, wherein the mass distribution device is configured to contact the moulding member in a sealing manner while the moulding member is moved,
- a movement device for moving the moulding member along the movement path from the fill position to the release position,
wherein the mould cavity is provided with a plurality of protrusions which extend from the bottom of the mould cavity. These protrusions, preferably perpendicularly arranged to the bottom part in view of product release, may be arranged in a regular pattern. A random distribution of protrusions will essentially have the same effect. In case of individual protrusions, a pattern having staggered projections may be applied. Advantageously the protrusions have a (frusto)conical shape having its base at the bottom part or bottom opening of a mould cavity. Alternatively, the protrusions may be formed by pens, for example. The protrusions may have a height corresponding to or smaller than the height of the mould cavity. The height is, for example, 10-100% of the cavity height of the mould cavity, wherein the cavity height is defined between the bottom and the cavity opening. This moulding device may be designed according to one or more of the features of the claims and/or according to one or more of the features mentioned in this description.

Below the invention will be illustrated in more detail by reference to the attached drawing, wherein:
Fig. 1 shows a diagrammatically view of an embodiment of a moulding device according to the invention;
Fig. 2 illustrates a moulding method according to the prior art;
Fig. 3 illustrates the moulding concept according to the invention;
Fig. 4-6 show different embodiments of a moulding element used in the invention;
Fig. 7-8 show embodiments of a moulded product; and
Fig. 9 shows an embodiment of a cooking method.
Fig. 10 shows another embodiment of a moulding device according to the invention.

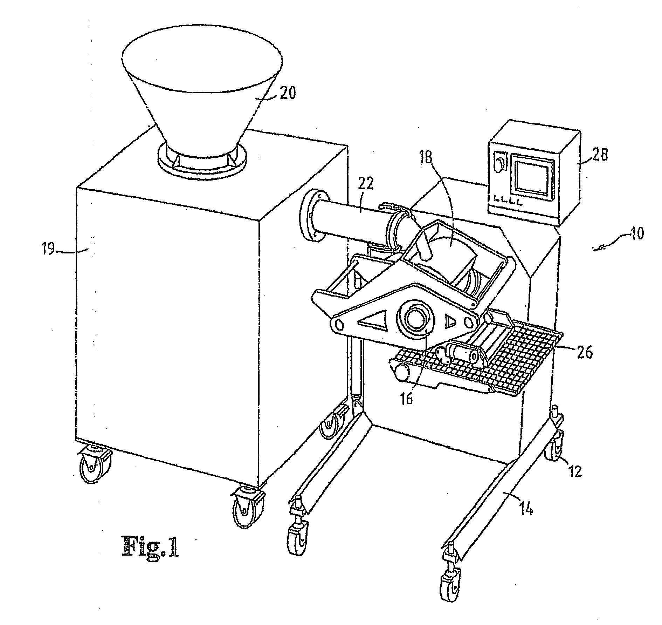

Fig. 1 diagrammatically illustrates an embodiment of a moulding device according to the invention. The moulding device is indicated in its entirety by reference numeral 10. The moulding device comprises a frame 14, which is displaceable by wheels 12. A moulding member 16, in this case a moulding drum rotatable about a horizontal shaft that is driven by a drive means (not shown) e.g. an (electro)motor, is mounted to the frame 14. The moulding member 16 is provided with a plurality of mould cavities (not visible in fig. 1), here at the outer periphery of the moulding drum. A mass distribution device 18 for distributing the mass of edible starting materials over the mould cavities of the moulding element 16 is arranged at a fill position and contacts the outer circumferential surface of the moulding element 16 in a sealing manner. A displaceable stock device 19 having a supply funnel 20 and a ((semi) continuously acting) pump (not shown) is fluidly connected to the mass distribution device 18 by a releasable connecting conduit 22. A conveyor 26, such as an endless belt, is arranged at a release position below the moulding element 16 and mass distribution device 18, where moulded products are released from the mould cavities and deposited onto the belt and conveyed to subsequent processing stations, such as a batter unit for applying batter liquid, a coating device e.g. for coating a particulate coating material like bread crumbs, freezer, packaging unit and the like. A control unit 28 is provided for controlling the various parts of the moulding device 10.

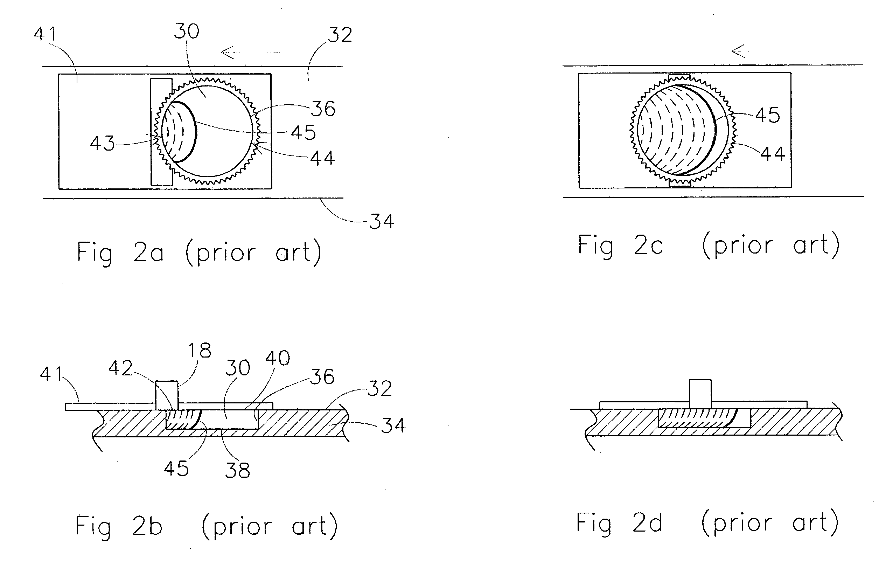

Fig. 2a-d illustrate a prior art moulding method using a conventional mould cavity. Figs. 2a and c are top views partially exploded, while Figs. 2b and d are cross sections. A circular disc shaped mould cavity 30 is a recess in moulding surface (or face) 32 of moulding body 34 and is delimited by upright walls 36 at its periphery and by a bottom 38 opposite to cavity opening (or mouth) 40. The movement direction of the moulding element 16 is indicated by an arrow. Upon movement of the moulding element 16 to the fill position, an outlet opening 42 in the flexible engaging plate 41 of the mass distribution device 18 starts overlapping the front end 43 of mould cavity 30. Due to the pressure exerted on the mass the mass is filled from the outlet opening 42 via cavity opening 40 into the mould cavity 30 and the mass also flows in the direction of the rear end 44 of the mould cavity 30, beyond the overlapping area of outlet opening 42 and cavity opening 40. The mass front 45 is indicated by a thicker line. Due to this flow in a plane at an angle (almost perpendicular) to the filling direction, the fibres present in the mass are (re)orientated, as shown by the dashed lines. Upon further movement of the moulding element 16 the overlapping area will increase to a maximum and then this area will decrease again. Fig. 2c and 2d show the situation, where the outlet opening 42 has about its maximum overlap with the cavity opening 40. Then the mass front 45 has almost approached the rear end 44 of the mould cavity 30 while at both lateral sides the mould cavity 30 is not filled yet. The fibre orientation over the surface of the product is different in various areas. Different fibre orientation results in inhomogeneous behaviour of the thus formed product, in particular non-uniform shrinkage.

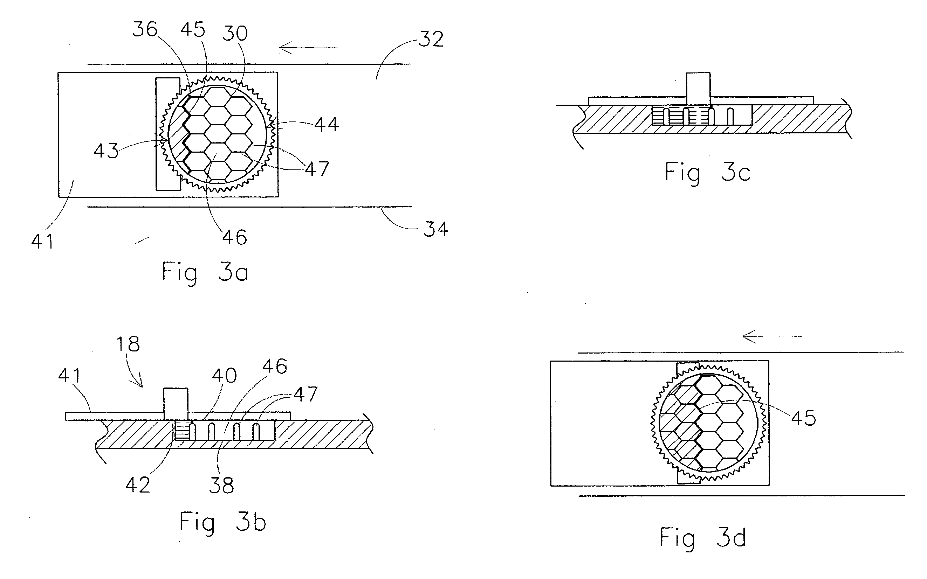

Fig. 3a-3d show the various processing stages according to the invention in a manner similar to Fig. 2, where the mould cavity 30 is provided with means for influencing the mass flow in the mould cavity. In this embodiment the mould cavity 30 is divided into hexagonal cells or compartments 46, defined by upright dividing walls 47 connected to the bottom 38. Other compartment shapes in top view such as round, oval, rectangular, square, triangle, polygonal, are equally applicable. As is apparent from figs. 3b and 3d the upright walls 47 have a height smaller than that of the mould cavity itself. In other words the upright compartment walls 47 have a height smaller than the peripheral cavity walls 36. During filling the upright walls 47 essentially restrict the mass flow to the upstream (seen in movement direction of moulding element) adjacent walls, i.e. hardly beyond the overlapping area of filling opening 42 and cavity opening 40. In fact, a row of cells 46 is filled simultaneously and the mould cavity 30 is filled stepwise, i.e. row by row. As a result the fibre-orientation in all cells 46 is highly similar, thereby resulting in highly uniform product properties throughout the product. In the embodiment shown the bottom 38 and upright walls 36 of the circular disc shaped mould cavity 30 are flat. It will be understood that other shapes of the mould cavity, non-flat bottom and wall surfaces defining the geometry of the product are equally applicable.

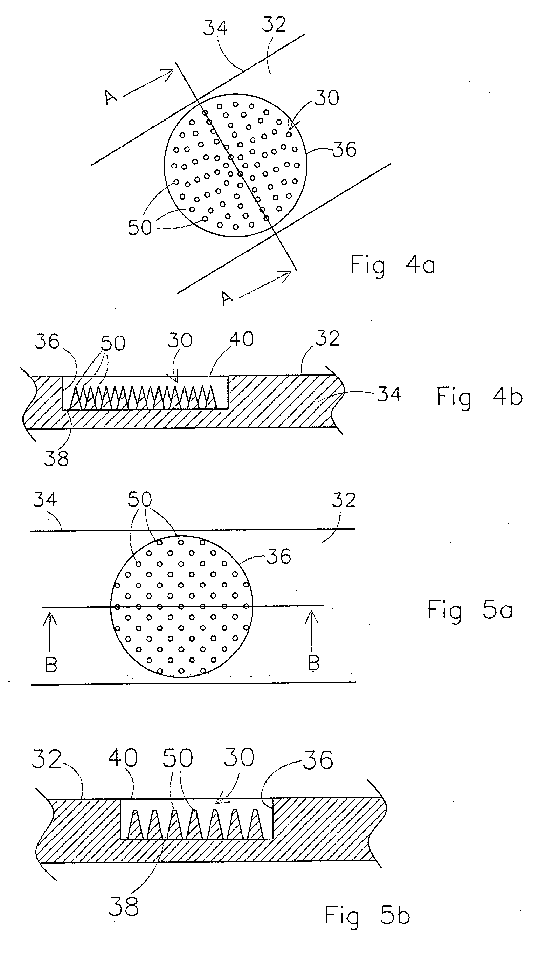

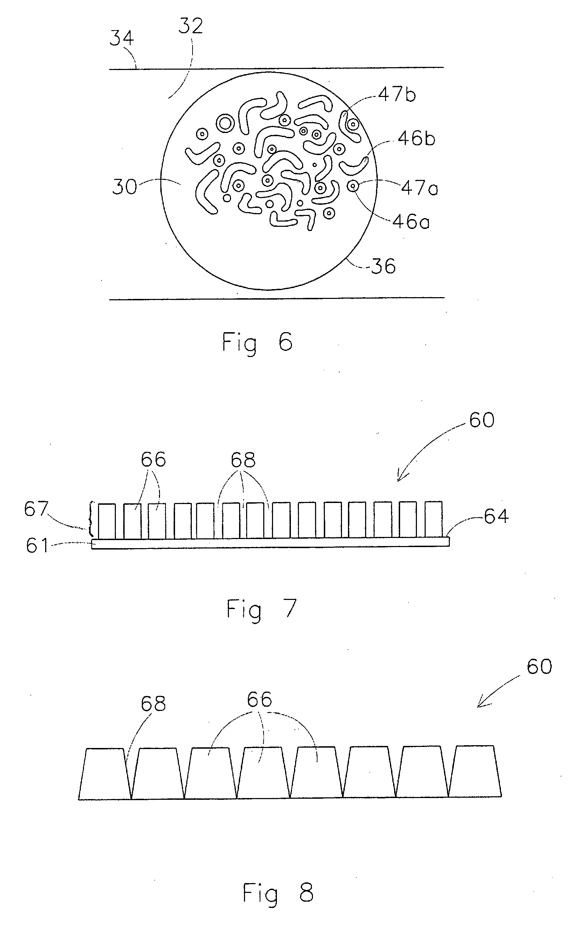

Figs. 4-6 show alternative embodiments of flow restricting means in a mould cavity 30. In the embodiment shown in fig. 4a and fig 4b (cross-section along line A-A) a plurality of conical projections 50 extending from the bottom 38 are arranged in circular pattern at different radii. Fig. 5a and 5b (cross-section along line B-B) show an embodiment wherein the projections 50 are arranged in staggered rows. Fig. 6 shows a mould cavity 30 divided into cells 46, cells 46a having a cylindrical shape and cells 46b having a wing like shape, the cells being defined by corresponding walls 47a and 47b respectively. Due to the distribution of the cells and combination of different shapes, the imprint if any, of the walls in the moulded product remaining after contact grilling is appreciated as a natural phenomenon.

Fig. 7 shows a cross section of moulded product 60 using a moulding device according to the invention, wherein the moulding element comprises a mould cavity divided into cylindrical cells. The moulded product 60 has a bottom or connecting layer 61. In this embodiment the moulded product has a continuous bottom surface 62. On the upper surface 64 of layer 61 small cylindrical elements 66 of mass forming a top layer 67 are present. The cylindrical elements 66 are spaced apart by gaps or voids 68 (exaggerated drawn) derived of the walls 47 as an imprint thereof. The elements 66 correspond to the cells 46, while the connecting layer 61 corresponds to the space between the top of the walls 47 defining the cells 46 and the cavity top opening 40.

Fig. 8 shows a cross section of a moulded product 60 using a moulding device according to the invention, wherein the mould cavity was provided with conical projections. Here the frustoconical elements 66 adhere to each other at the very bottom part.

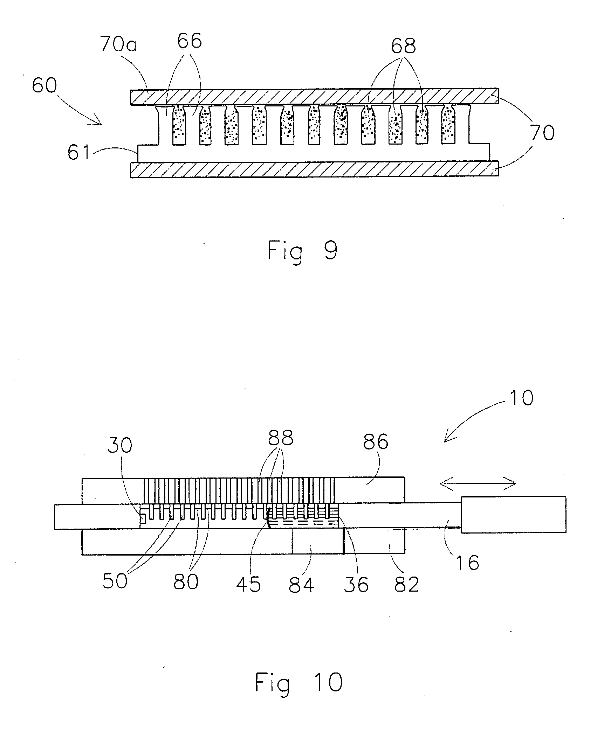

Fig. 9 shows a food preparation method according to the invention, wherein a moulded product 60 according to the invention is placed between the upper and bottom contact plates 70 of a contact grill as frequently used in fastfood restaurants and the like. Due to the contact pressure the top of the elements 66 of the moulded product 60 are broadened such that the broadened parts may adhere to each other. Any way, macro voids 68 derived from the flow restriction means are present in the moulded product 60 and enclosed by the mass itself or in combination with the upper grill plate 70a. During grilling steam develops in these voids providing a very efficient heat transfer, resulting in a substantial reduction of grilling time. Furthermore moisture, like juices and fat are retained in these voids, thereby providing excellent organoleptical properties in particular tenderness and bite. Moreover, weight loss due to escape of moisture is reduced.

Fig. 10 shows an embodiment of moulding device 10 having a linearly reciprocating moulding element 16, wherein the mould cavity 30 is provided with flow restricting means. In this embodiment protrusions 50 are connected by small radial spokes 80 to the upright walls 36. The mass distribution device has a filling plate 82 having an outlet opening 84, through which mass is forced under pressure. The direction of mass flow is indicated by an arrow. A counterplate 86 is provided with small apertures 88 for de-aeration purposes.

## Claims

1. Moulding device (10) for moulding three dimensional products (60) from a mass of foodstuff starting material suitable for consumption, comprising:
- a moulding member (16) having a moulding surface (32) which is provided with at least one mould cavity (30) which is delimited by a bottom (38) and a peripheral wall (36) defining a cavity opening (40) in the moulding surface (32), wherein the mould cavity (30) has a cavity height which is defined between the bottom (38) and the cavity opening (40), which moulding member (16) can be moved along a movement path from a fill position for filling the mass into the mould cavity (30) to a product release position for releasing a moulded product (60) from the mould cavity (30) and from the product release position to the fill position,
- a mass distribution device (18), which is arranged at the fill position along the movement path of the moulding member (16) for filling the mass into the mould cavity (30), wherein the mass distribution device (18) is configured to contact the moulding member (16) in a sealing manner while the moulding member (16) is moved, and wherein the mass distribution device (18) comprises an outlet opening (42) which has a width which extends in a direction parallel to the movement path of the moulding member (16),
- a movement device for moving the moulding member (16) along the movement path from the fill position to the release position,
wherein the mould cavity (30) is provided with walls (47) which are configured to define a plurality of moulding cells (46) within the mould cavity (30), wherein at least two of the moulding cells (46) are arranged behind one another in the direction of the movement path of the moulding member (16),
**characterised in that**
the width of the outlet opening (42) of the mass distribution device (18) is smaller than the largest dimension of the mould cavity (30) in the direction parallel to the movement path of the moulding member (16), and each wall (47) has a height which is 50-100% of the cavity height of the mould cavity (30).

2. Moulding device as claimed in claim 1, wherein the mould cavity (30) comprises 2-300 moulding cells (46), for example 10-100 moulding cells (46).

3. Moulding device as claimed in claim 1 or 2, wherein the cavity opening (40) defines an area of 3-400 cm² and/or wherein the cavity opening (40) has a volume which is less than 400 cm³.

4. Moulding device as claimed in one of the preceding claims, wherein the cavity height of the mould cavity (30) is 2-40 mm, for example 5-15 mm.

5. Moulding device as claimed in one of the preceding claims, wherein the walls (47) have a thickness of 0.5-5 mm.

6. Moulding device as claimed in one of the preceding claims, wherein the moulding cells (46) of the mould cavity (30) have substantially equal volumes.

7. Moulding device as claimed in one of the preceding claims, wherein the height of the walls (47) is smaller than the cavity height of the mould cavity (30)

8. Moulding device as claimed in one of the preceding claims, wherein the peripheral wall (36) and the bottom (38) of the mould cavity (30) are arranged in a moulding body (34).

9. Moulding device as claimed in one of the preceding claims, wherein the moulding cells (46) comprise projections (50) which extend in the height direction of the mould cavity (30).

10. Moulding device as claimed in one of the preceding claims, wherein the moulding member (16) comprises a curved surface, which is provided with the mould cavity (30).

11. Moulding device as claimed in one of the preceding claims, wherein the bottom (38) of the mould cavity of the moulding member (16) is stationary in the height direction of the mould cavity (30).

12. Moulding device as claimed in one of the preceding claims, wherein the moulding member (16) comprises a first plate, which is provided with at least one through opening which defines the peripheral wall (36) of the mould cavity (30), and also a second plate extending adjacent to the first plate so as to form the bottom (38) of the mould cavity (30), and wherein the first plate and the second plate can be moved with respect to each other.

## Patentansprüche

1. Formvorrichtung (10) zum Formen von dreidimensionalen Produkten (60) aus einer Masse eines Nahrungsmittel-Ausgangsmaterials, welches zum Verbrauch geeignet ist, umfassend:
- ein Formteil (16), welches eine Formfläche (32) aufweist, welche mit mindestens einem Formhohlraum (30) versehen ist, welcher durch einen Boden (38) und eine Umfangswand (36) begrenzt ist, welche eine Hohlraumöffnung (40) in der Formfläche (32) definiert, wobei der Formhohlraum (30) eine Hohlraumhöhe aufweist, welche zwischen dem Boden (38) und der Hohlraumöffnung (40) definiert ist, wobei das Formteil (16) entlang einer Bewegungsbahn von einer Einfüllposition, um die Masse in den Formhohlraum (30) einzufüllen, zu einer Produktabgabeposition, um ein geformtes Produkt (60) von dem Formhohlraum (30) abzugeben, und von der Produktabgabeposition zu der Einfüllposition bewegt werden kann,
- eine Massenverteilungsvorrichtung (18), welche bei der Einfüllposition entlang der Bewegungsbahn des Formteils (16) angeordnet ist, um die Masse in den Formhohlraum (30) einzufüllen, wobei die Massenverteilungsvorrichtung (18) ausgestaltet ist, um das Formteil (16) in einer abdichtenden Weise zu kontaktieren, während das Formteil (16) bewegt wird, und wobei die Massenverteilungsvorrichtung (18) eine Auslassöffnung (42) umfasst, welche eine Breite aufweist, die sich in einer Richtung parallel zu der Bewegungsbahn des Formteils (16) erstreckt,
- eine Bewegungsvorrichtung, um das Formteil (16) entlang der Bewegungsbahn von der Einfüllposition zu der Abgabeposition zu bewegen,
wobei der Formhohlraum (30) mit Wänden (47) versehen ist, welche ausgestaltet sind, um mehrere Formzellen (46) in dem Formhohlraum (30) zu definieren, wobei mindestens zwei der Formzellen (46) hintereinander in der Richtung der Bewegungsbahn des Formteils (16) angeordnet sind,
**dadurch gekennzeichnet,**
**dass** die Breite der Auslassöffnung (42) der Massenverteilungsvorrichtung (18) kleiner als die größte Abmessung des Formhohlraums (30) in der Richtung parallel zu der Bewegungsbahn des Formteils (16) ist, und dass jede Wand (47) eine Höhe aufweist, welche 50-100 % der Hohlraumhöhe des Formhohlraums (30) entspricht.

2. Formvorrichtung nach Anspruch 1, **dadurch gekennzeichnet, dass** der Formhohlraum (30) 2-300 Formzellen (46), zum Beispiel 10-100 Formzellen (46), umfasst.

3. Formvorrichtung nach Anspruch 1 oder 2, **dadurch gekennzeichnet, dass** die Hohlraumöffnung (40) eine Fläche von 3-400 cm² definiert und/oder dass die Hohlraumöffnung (40) ein Volumen aufweist, welches kleiner als 400 cm³ ist.

4. Formvorrichtung nach einem der vorhergehenden Ansprüche, **dadurch gekennzeichnet, dass** die Hohlraumhöhe des Formhohlraums (30) 2-40 mm, zum Beispiel 5-15 mm, beträgt.

5. Formvorrichtung nach einem der vorhergehenden Ansprüche, **dadurch gekennzeichnet, dass** die Wände (47) eine Dicke von 0,5-5 mm aufweisen.

6. Formvorrichtung nach einem der vorhergehenden Ansprüche, **dadurch gekennzeichnet, dass** die Formzellen (46) des Formhohlraums (30) ein im Wesentlichen gleiches Volumen aufweisen.

7. Formvorrichtung nach einem der vorhergehenden Ansprüche, **dadurch gekennzeichnet, dass** die Höhe der Wände (47) kleiner als die Hohlraumhöhe des Formhohlraums (30) ist.

8. Formvorrichtung nach einem der vorhergehenden Ansprüche, **dadurch gekennzeichnet, dass** die Umfangswand (36) und der Boden (38) des Formhohlraums (30) in einem Formkörper (34) angeordnet sind.

9. Formvorrichtung nach einem der vorhergehenden Ansprüche, **dadurch gekennzeichnet, dass** die Formzellen (46) Vorsprünge (50) umfassen, welche sich in der Höhenrichtung des Formhohlraums erstrecken.

10. Formvorrichtung nach einem der vorhergehenden Ansprüche, **dadurch gekennzeichnet, dass** das Formteil (16) eine gekrümmte Fläche umfasst, welche mit dem Formhohlraum (30) versehen ist.

11. Formvorrichtung nach einem der vorhergehenden Ansprüche, **dadurch gekennzeichnet, dass** der Boden (38) des Formhohlraumes des Formteils (16) ortsfest in der Höhenrichtung des Formhohlraumes (30) ist.

12. Formvorrichtung nach einem der vorhergehenden Ansprüche, **dadurch gekennzeichnet, dass** das Formteil (16) eine erste Platte, welche mit mindestens einer Durchgangsöffnung versehen ist, die die Umfangswand (36) des Formhohlraumes (30) definiert, und auch eine zweite Platte, welche sich neben der ersten Platte erstreckt, um so den Boden (38) des Formhohlraumes (30) auszubilden, versehen ist, und dass die erste Platte und die zweite Platte bezüglich einander bewegt werden können.

## Revendications

1. Dispositif de moulage (10) pour mouler des produits tridimensionnels (60) à partir d'une masse de matière alimentaire de départ appropriée pour la consommation, comprenant :
un élément de moulage (16) ayant une surface de moulage (32) qui est prévue avec au moins une cavité de moule (30) qui est délimitée par un fond (38) et une paroi périphérique (36) définissant une ouverture de cavité (40) dans la surface de moulage (32), dans lequel la cavité de moule (30) a une hauteur de cavité qui est définie entre le fond (38) et l'ouverture de cavité (40), lequel élément de moulage (16) peut être déplacé le long d'une trajectoire de déplacement à partir d'une position de remplissage pour verser la masse dans la cavité de moule (30) jusqu'à une position de démoulage de produit pour démouler un produit moulé (60) de la cavité de moule (30) et de la position de démoulage de produit à la position de remplissage,
un dispositif de distribution de masse (18) qui est agencé dans la position de remplissage le long de la trajectoire de déplacement de l'élément de moule (16) pour verser la masse dans la cavité de moule (30), dans lequel le dispositif de distribution de masse (18) est configuré pour entrer en contact avec l'élément de moulage (16) d'une manière étanche alors que l'élément de moulage (16) se déplace, et dans lequel le dispositif de distribution de masse (18) comprend une ouverture de sortie (42) qui a une largeur qui s'étend dans une direction parallèle à la trajectoire de déplacement de l'élément de moulage (16),
un dispositif de déplacement pour déplacer l'élément de moulage (16) le long de la trajectoire de déplacement, de la position de remplissage à la position de démoulage,
dans lequel la cavité de moule (30) est prévue avec des parois (47) qui sont configurées pour définir une pluralité de cellules de moulage (46) à l'intérieur de la cavité de moule (30), dans lequel au moins deux des cellules de moulage (46) sont agencées l'une derrière l'autre dans la direction de la trajectoire de déplacement de l'élément de moulage (16),
**caractérisé en ce que :**
la largeur de l'ouverture de sortie (42) du dispositif de distribution de masse (18) est inférieure à la plus grande dimension de la cavité de moule (30) dans la direction parallèle à la trajectoire de déplacement de l'élément de moule (16), et chaque paroi (47) a une largeur qui représente de 50 à 100% de la hauteur de cavité de la cavité de moule (30).

2. Dispositif de moulage selon la revendication 1, dans lequel la cavité de moule (30) comprend de 2 à 300 cellules de moulage (46), par exemple de 10 à 100 cellules de moulage (46).

3. Dispositif de moulage selon la revendication 1 ou 2, dans lequel l'ouverture de cavité (40) définit une surface de 3-400 cm² et/ou dans lequel l'ouverture de cavité (40) a un volume qui est inférieur à 400 cm³.

4. Dispositif de moulage selon l'une des revendications précédentes, dans lequel la hauteur de cavité de la cavité de moule (30) est de 2 à 40 mm, par exemple de 5 à 15 mm.

5. Dispositif de moulage selon l'une des revendications précédentes, dans lequel les parois (47) ont une épaisseur de 0,5 à 5 mm.

6. Dispositif de moulage selon l'une des revendications précédentes, dans lequel les cellules de moulage (46) de la cavité de moule (30) ont des volumes sensiblement égaux.

7. Dispositif de moulage selon l'une des revendications précédentes, dans lequel la hauteur des parois (47) est inférieure à la hauteur de cavité de la cavité de moule (30).

8. Dispositif de moulage selon l'une des revendications précédentes, dans lequel la paroi périphérique (36) et le fond (38) de la cavité de moule (30) sont agencés dans un corps de moulage (34).

9. Dispositif de moulage selon l'une des revendications précédentes, dans lequel les cellules de moulage (46) comprennent des saillies (50) qui s'étendent dans le sens de la hauteur de la cavité de moule (30).

10. Dispositif de moulage selon l'une des revendications précédentes, dans lequel l'élément de moulage (16) comprend une surface incurvée qui est prévue dans la cavité de moule (30).

11. Dispositif de moulage selon l'une des revendications précédentes, dans lequel le fond (38) de la cavité de moule de l'élément de moulage (16) est fixe dans le sens de la hauteur de la cavité de moule (30).

12. Dispositif de moulage selon l'une des revendications précédentes, dans lequel l'élément de moulage (16) comprend une première plaque qui est prévue avec au moins une ouverture débouchante qui définit la paroi périphérique (36) de la cavité de moule (30) et également une seconde plaque s'étendant de manière adjacente à la première plaque afin de former le fond (38) de la cavité de moule (30) et dans lequel la première plaque et la seconde plaque peuvent être déplacées l'une par rapport à l'autre.
